# EUROPEAN PATENT SPECIFICATION

(11) **EP 3 588 818 B1**
(45) Date of publication and mention of the grant of the patent: **03.12.2025**
(21) Application number: 18179714.3
(22) Date of filing: 26.06.2018
(51) Int. Cl.: H04J 14/02

(54) **MULTI-DEGREE COLORLESS DIRECTIONLESS ROADM SYSTEM**
MEHRGRADIGES WELLENLÄNGENUNABHÄNGIGES RICHTUNGSUNABHÄNGIGES ROADM-SYSTEM
SYSTÈME DE ROADM SANS DIRECTION INCOLORE À DEGRÉS MULTIPLES

(43) Date of publication of application: 01.01.2020
(73) Proprietor: Koninklijke KPN N.V., 3072 AP Rotterdam (NL)
(72) Inventor: Mefleh, Ali, 1058 VV Amsterdam (NL)
(74) Representative: De Vries & Metman

(56) References cited:
- WO-A1-2009/091525
- US-A1- 2014 023 373
- US-A1- 2014 147 121
- US-A1- 2015 208 146
- US-A1- 2017 302 397

## Description

### FIELD OF THE INVENTION

The invention relates to a Reconfigurable Optical Add Drop Multiplexer (ROADM) system, and specifically to a Colorless Directionless (CD) ROADM system.

The invention further relates to a transport network comprising the CD ROADM system, to a method of reconfiguring the CD ROADM system, to a computer program comprising instructions to perform the method of reconfiguring the CD ROADM system, and to a method of establishing the CD ROADM system.

### BACKGROUND ART

In Wavelength Division Multiplexing (WDM) networks, it is desirable to be able to switch traffic at the wavelength layer. For that purpose, Reconfigurable Optical Add Drop Multiplexer (ROADM) systems have been developed which allow for adding, dropping and express-routing traffic through network nodes. The publication "Comparison of CD(C) ROADM Architectures for Space Division Multiplexed Networks" by Rivas-Moscoso et al., OFC, January 2017, describes a typical ROADM architecture, which comprises a number of degrees and a corresponding number of add-drop modules. The degrees may be interconnected, for example, by a full-mesh set of interconnections, so as to allow traffic to be routed between the degrees. Such interconnections are typically fiber-optic interconnections. Each add-drop module may provide a plurality of add-ports and a plurality of drop-ports for the respective degree. Such add-ports and drop-ports may also be commonly referred to as 'add-drop ports'.

Colorless and Directionless (CD) ROADM systems have been developed to provide architectural flexibility and operational efficiency. CD ROADM systems are typically based on Wavelength Selective Switches (WSSs), which in particular may be used as (de)multiplexers of the degrees and/or of the add-drop modules. Here, 'colorless' may refer to a ROADM architecture in which any add-drop port (or at least a sizeable subset of all add-drop ports) accepts any wavelength. Moreover, 'directionless' may refer to a ROADM architecture in which traffic from any degree is switchable to any of the add-drop ports of any other degree, and vice versa (or at least switchable to/from a sizeable subset of degrees and/or add-drop ports).

In prior art CD ROADM architectures, 'directionless' is established by each degree being directly connected to each of the add-drop modules. Such a configuration of interconnections is also known as a 'full-mesh' configuration.

Consider for example a CD ROADM architecture in which each degree comprises a i) demultiplexer having an input port for a wavelength multiplexed input signal and a plurality of output ports for demultiplexing the wavelength multiplexed input signal into a plurality of demultiplexed output signals, and ii) a multiplexer having an output port for a wavelength multiplexed output signal and a plurality of input ports for multiplexing a plurality of input signals into the wavelength multiplexed output signal. In such a CD ROADM architecture, each degree may be connected to each of the add-drop modules to establish the aforementioned full-mesh configuration of interconnections. Accordingly, for an N-degree CD ROADM architecture, N ports of each degree's demultiplexer and N ports of each degree's multiplexer have to be allocated for interconnections with the add-drop modules so as to establish the full-mesh interconnections with the add-drop modules. When also considering that in an N-degree CD ROADM architecture, N-1 ports may be needed to interconnect the degrees themselves to establish a full-mesh configuration, this means that each degree needs to be provided with a multiplexer and a demultiplexer each having at least 2N-1 ports.

As such, when using for example WSSs with 20 ports for each of the degree's demultiplexer and multiplexer, only a 10-degree ROADM can be made. Similarly, a WSS with 32 ports only allows a 16-degree ROADM to be made.

Disadvantageously, such a known CD ROADM architecture only allows a N/2 degree ROADM to be made when using an N-port WSS.

US 2014/0023373 describes a CDC ROADM comprising an optical dropper and optical adder. The optical dropper includes a plurality of drop wavelength selection/input units corresponding to respective routes, and a number of drop matrix switches serving as switchers for outputting wavelength-specific optical signals output from respective drop wavelength selection/input units to different optical paths. Each drop wavelength selection/input units is connected to the other drop wavelength selection/input units. The optical adder has a number of add matrix switches that serve as switchers for selectively inputting wavelength-specific optical signals from a plurality of optical paths to a plurality of add wavelength selection/output units corresponding to respective routes. Each add wavelength selection/output units is connected to the other add wavelength selection/output units.

### SUMMARY OF THE INVENTION

It would be desirable to obtain a CD ROADM system in which directionless is established in a manner using fewer ports of a respective degree.

In accordance with a first aspect of the invention, a multi-degree colorless directionless reconfigurable optical add drop multiplexer system is provided.

The system may comprise:
- a plurality of degrees, each of the degrees having:
   a demultiplexer having an input port for a wavelength multiplexed input signal and a plurality of output ports for demultiplexing the wavelength multiplexed input signal into a plurality of demultiplexed output signals, and
   a multiplexer having an output port for a wavelength multiplexed output signal and a plurality of input ports for multiplexing a plurality of input signals into the wavelength multiplexed output signal;
- a plurality of add-drop modules, wherein each of the add-drop modules comprises an add sub-module and a drop sub-module, each drop sub-module comprising a drop demultiplexer having a plurality of drop ports and each add sub-module comprising an add multiplexer having a plurality of add ports;
wherein:
- each of the degrees is selectively connected to a respective add-drop module; and
- the add-drop modules are interconnected via a set of interconnections to enable traffic to be routed from each add-drop module to each other add-drop module via the set of interconnections,
characterized in that:
the set of interconnections forms a loop of interconnections between the add-drop modules without forming a full mesh of interconnections between the add-drop modules.

In a further aspect of the invention, a transport network is provided comprising a multi-degree colorless directionless reconfigurable optical add drop multiplexer system, which system may comprise:
- a plurality of degrees, each of the degrees having:
   a demultiplexer having an input port for a wavelength multiplexed input signal and a plurality of output ports for demultiplexing the wavelength multiplexed input signal into a plurality of demultiplexed output signals, and
   a multiplexer having an output port for a wavelength multiplexed output signal and a plurality of input ports for multiplexing a plurality of input signals into the wavelength multiplexed output signal;
- a plurality of add-drop modules, wherein each of the add-drop modules comprises an add sub-module and a drop sub-module, each drop sub-module comprising a drop demultiplexer having a plurality of drop ports and each add sub-module comprising an add multiplexer having a plurality of add ports;
wherein:
- each of the degrees is selectively connected to a respective add-drop module; and
- the add-drop modules are interconnected via a set of interconnections to enable traffic to be routed from each add-drop module to each other add-drop module via the set of interconnections,
characterized in that:
the set of interconnections forms a loop of interconnections between the add-drop modules without forming a full mesh of interconnections between the add-drop modules.

In a further aspect of the invention, a method of establishing a multi-degree colorless directionless reconfigurable optical add drop multiplexer system is provided.

The method may comprise:
- providing a plurality of degrees, each of the degrees having:
   a demultiplexer having an input port for a wavelength multiplexed input signal and a plurality of output ports for demultiplexing the wavelength multiplexed input signal into a plurality of demultiplexed output signals, and
   a multiplexer having an output port for a wavelength multiplexed output signal and a plurality of input ports for multiplexing a plurality of input signals into the wavelength multiplexed output signal;
- providing a plurality of add-drop modules, wherein each of the add-drop modules comprises an add sub-module and a drop sub-module, each drop sub-module comprising a drop demultiplexer having a plurality of drop ports and each add sub-module comprising an add multiplexer having a plurality of add ports;
wherein:
- selectively connecting each of the degrees to a respective add-drop module; and
- interconnecting the add-drop modules via a set of interconnections to enable traffic to be routed from each add-drop module to each other add-drop module via the set of interconnections,
characterized in that:
the set of interconnections forms a loop of interconnections between the add-drop modules without forming a full mesh of interconnections between the add-drop modules.

The above measures provide a CD ROADM system in which 'directionless' is established as follows. Namely, instead of connecting each degree with each add-drop module in the manner as described in the background section, each degree is selectively connected to a respective add-drop module. Here, the adjective '*selective'* may be interpreted as '*only'* or as '*only to a subset of all add-drop modules'.* As such, each degree may only be connected to its corresponding add-drop module, or only to a subset of the add-drop modules of the other degrees, rather than to each add-drop module of each degree. The degrees are thus not connected to the add-drop modules in accordance with a 'full-mesh' configuration, allowing the use of more than N/2 degrees in a ROADM comprising an N port WSS, with a maximum of N degrees if every degree is coupled to only one add-drop module.

To nevertheless enable the traffic from any degree to be routed to any of the add-drop modules, the add-drop modules may be interconnected via a set of interconnections to enable traffic flow between the add-drop modules. In particular, the interconnections between the add-drop modules may be such that each add-drop module may be reached from any of the add-drop modules. Accordingly, traffic may flow from any degree to its corresponding add-drop module, and then via the interconnections between the add-drop modules to any other add-drop module.

This manner of establishing 'directionless' may have various advantages. For example, fewer ports may be needed at the degrees since each degree may be connected only to one add-drop module, or at least to fewer than all add-drop modules.

For example, in a N-degree configuration of the CD ROADM as claimed, 1 port of each degree's demultiplexer and 1 port of each degree's multiplexer may suffice for interconnections with the add-drop modules, whereas N-1 ports may be needed to interconnect the degrees themselves in accordance with a full-mesh configuration. This means that each degree may need to provide a multiplexer and a demultiplexer each having at least N ports, which is considerably less than the 2N-1 ports of the known architecture. For example, for a 4-degree CD ROADM system, 4 rather than 7 ports are needed for a full-mesh configuration, whereas for a 10-degree CD ROADM system, 10 rather than 19 ports are needed. Another advantage is that a later addition of a degree, e.g., by means of an upgrade, only represents an 'added cost' of 1 instead of 2 ports.
Such an architecture is better scalable to a high number of degrees as the number of ports scales approximately only by half of the scaling of the known architecture.

Of course, it is noted that in certain use-cases, it may not be needed for each add-drop module to be reachable from any of the other add-drop modules. In such use-cases, it may suffice if, for example, only a subset of the add-drop modules is mutually interconnected to enable each add-drop module within the subset to be reachable from any of the other add-drop modules within the subset. As such, any of the above references to 'any' and 'each' may be understood as applying to this subset.

In an embodiment,
- each drop sub-module may further comprise a drop multiplexer comprising a plurality of input ports for multiplexing a plurality of input signals into an output signal provided to the drop demultiplexer;
- each add sub-module may further comprise an add demultiplexer comprising a plurality of output ports for demultiplexing an output signal of the add multiplexer to the plurality of output ports; and
- each of the add-drop modules may be interconnected to at least one other add-drop module by:
   an output port of the drop demultiplexer of a respective add-drop module being connected to an input port of the drop multiplexer of the at least one other add-drop module, and
   an output port of the add demultiplexer of the respective add-drop module being connected to an input port of the add multiplexer of the at least one other add-drop module.

In this embodiment, one or more output (drop) ports of the drop demultiplexer and one or more output ports of the add demultiplexer may be used to route traffic to one or more other add-drop modules, and one or more input ports of the drop multiplexer and one or more input (add) ports of the add multiplexer may be used to receive traffic from one or more other add-drop modules. This is an advantageous way of interconnecting the add-drop modules, as re-use is made of the drop ports and add ports of the add-drop modules, while additionally using the output ports of the add demultiplexer and the input ports of the drop multiplexer, both of which are normally present in add-drop modules of colorless and directionless ROADM systems.

In this respect, it is noted that a single WSS may not always suffice to provide a sufficient number of drop (or add) ports to allow 1) a desired number of wavelengths to be dropped (or added) and 2) the add-drop modules to be interconnected. Accordingly, as is known per se, the drop demultiplexer may comprise a plurality of WSS which are mutually interconnected, e.g., via a cascade, so as to establish a drop demultiplexer having more drop ports than those provided by a single WSS. Similarly, the add multiplexer may comprise a plurality of WSS which are mutually interconnected, e.g., via a cascade, so as to provide an add multiplexer having more add ports than those provided by a single WSS. Any reference to 'drop demultiplexer' and 'add multiplexer' is thus to be understood as including the use of such a respective plurality of WSSs which are mutually interconnected. The above also applies to (de)multiplexers other than WSS, such as combiners and splitters.

In an embodiment, each of the degrees may be selectively connected to the respective add-drop module by:
- an output port of the demultiplexer of the degree being connected to an input port of the drop multiplexer of the drop sub-module; and
- the input port of the multiplexer of the degree being connected to an output port of the add demultiplexer of the add sub-module.

The drop multiplexer of the drop sub-module may thus act as input port for the degree, while the add demultiplexer of the add sub-module may act as output port towards the degree. This allows each degree to be connected to the respective add-drop module using the output ports of the add demultiplexer and the input ports of the drop multiplexer, both of which are normally present in add-drop modules of colorless and directionless ROADM systems.

The add-drop modules may be interconnected in various ways.

The set of interconnections forms a loop of interconnections between the add-drop modules. Such a loop may allow all connected add-drop modules to be reachable by traffic flow via the loop. Such a loop may be established in various ways. For example, the interconnections may be such that traffic can only flow in one direction along the loop, for example from degree D1 to degree D2 to degree D3 and back to degree D1 in case of a three-degree system. This may also be referred to as a 'unidirectional' loop. Alternatively, the loop may allow traffic to flow in both directions, e.g., clockwise and counterclockwise. This may also be referred to as a 'bidirectional' loop. Such a bidirectional loop may require up to twice the number of interconnections, as will be elucidated further onwards, but may on average require the traffic to take fewer 'hops' within the add-drop plane of the ROADM system. Here, the term 'hop' may in general refer to the number of active elements via which traffic is routed, e.g., the number of multiplexers, demultiplexers, ROADM's, etc.

In an embodiment, each add-drop module may be connected to only two other add-drop modules. In such a case, the add-drop modules may be connected only by a (single) loop. An advantage of only using a loop is that the number of interconnections may be kept low or to a minimum. Accordingly, a low or minimum number of ports may be needed at each add-drop module. For example, in case of a directional loop, at each add-drop module, only one output port of the add demultiplexer and one output port of the drop demultiplexer may be needed to route traffic to a 'next' add-drop module, while only one input port of the add multiplexer and one input port of the drop multiplexer may be needed to receive traffic from a 'previous' add-drop module. Here, the adjectives 'next' and 'previous' may refer to the relative positions of add-drop modules along the traffic flow within the directional loop.

In an embodiment, the add-drop modules may be interconnected by, in addition to the connections between the add-drop modules forming the loop, additional connections between pairs of add-drop modules. There may be limitations in the number of hops traffic may take, e.g., due to signal performance. Disadvantageously, a single loop may in some cases cause traffic to be repeatedly routed from one add-drop module to another, causing the signal to be attenuated. Another disadvantage is that the loop may represent a capacity bottleneck. For this and other reasons, additional connections between pairs of add-drop modules may be provided besides those which establish the loop. Such connections may be selectively established, e.g., to optimize the number of interconnections and thus ports against the average or maximum number of 'hops' which is needed to reach a particular add-drop module.

In an embodiment not covered by the claimed invention, the set of interconnections forms a full mesh of interconnections between the add-drop modules. This may enable each add-drop module to be directly reached from any other add-drop module, thereby reducing or minimizing signal attenuation and increasing capacity between add-drop modules.

In an embodiment, each of the degrees may be interconnected to each of the other degrees by an output port of the demultiplexer of the respective degree being connected to an input port of the multiplexer of each of the other degrees. The degrees themselves may thus be interconnected in accordance with a 'full-mesh' configuration.

In a further aspect of the invention, a method may be provided for re-configuring the system as described above in any of the embodiments.

For example, the system may comprise:
- a plurality of degrees, each of the degrees having:
   a demultiplexer having an input port for a wavelength multiplexed input signal and a plurality of output ports for demultiplexing the wavelength multiplexed input signal into a plurality of demultiplexed output signals, and
   a multiplexer having an output port for a wavelength multiplexed output signal and a plurality of input ports for multiplexing a plurality of input signals into the wavelength multiplexed output signal;
- a plurality of add-drop modules, wherein each of the add-drop modules comprises an add sub-module and a drop sub-module, each drop sub-module comprising a drop demultiplexer having a plurality of drop ports and each add sub-module comprising an add multiplexer having a plurality of add ports;
   wherein
- each of the degrees is selectively connected to a respective add-drop module; and
- the add-drop modules are interconnected via a set of interconnections to enable traffic to be routed from each add-drop module to each other add-drop module via the set of interconnections,
characterized in that:
the set of interconnections forms a loop of interconnections between the add-drop modules without forming a full mesh of interconnections between the add-drop modules).

The method may comprise reconfiguring one or more multiplexers and/or demultiplexers of the system to re-route network traffic designated to be dropped via a designated add-drop module which is connected to a particular degree to flow via:
i) another degree, and then
ii) the add-drop module connected to the other degree, and then
iii) the interconnections between the add-drop modules,
to the designated add-drop module.

As is known per se, the multiplexers and demultiplexers of a ROADM system may be remotely configurable and may thus be configured to enable traffic to be routed from any degree to the add-drop module of any other degree.

In a further aspect of the invention, a transitory or non-transitory computer-readable medium may be provided which comprises a computer program comprising instructions for causing a processor system to perform the method.

It will be appreciated by those skilled in the art that two or more of the above-mentioned embodiments, implementations, and/or aspects of the invention may be combined in any way deemed useful.

Modifications and variations of any method or computer program, which correspond to the described modifications and variations of the system, and vice versa, may be carried out by a person skilled in the art on the basis of the present description.

### BRIEF DESCRIPTION OF THE DRAWINGS

These and other aspects of the invention are apparent from and will be elucidated with reference to the embodiments described hereinafter. In the drawings,
Fig. 1 shows a colorless directionless ROADM system comprising a plurality of degrees and a plurality of add-drop modules, in which each degree is connected with each other degree and selectively with a respective one of the add-drop modules;
Fig. 2A illustrates the interconnection of add-drop modules, specifically showing how the drop sub-modules of the add-drop modules are interconnected;
Fig. 2B illustrates the interconnection of add-drop modules, specifically showing how the add sub-modules of the add-drop modules are interconnected;
Fig. 3 corresponds to Fig. 1 while additionally showing the interconnections of the add-drop modules as shown individually in Figs. 2A and 2B;
Fig. 4 shows the interconnections of add-drop modules for a four-degree ROADM system, in which the add-drop modules are interconnected by a loop;
Fig. 5 shows an alternative to the loop-based interconnections between the add-drop modules of the three-degree ROADM system of Fig. 3;
Fig. 6 shows the interconnections of add-drop modules for a three-degree ROADM system in which the add-drop modules are interconnected by a full-mesh;
Fig. 7 shows a method of establishing a colorless directionless ROADM system as shown in Figs. 1-6;
Fig. 8 shows a computer readable medium comprising non-transitory data comprising instructions for causing a processor system to perform the method; and
Fig. 9 shows an exemplary data processing system.

It should be noted that items which have the same reference numbers in different figures, have the same structural features and the same functions, or are the same signals. Where the function and/or structure of such an item has been explained, there is no necessity for repeated explanation thereof in the detailed description.

### List of reference and abbreviations

The following list of references and abbreviations is provided for facilitating the interpretation of the drawings and shall not be construed as limiting the claims.
100ROADM system
D1-D4 degrees
P1 degree plane
P2 add-drop plane
AD1-AD4 add-drop modules
A1-A4 add sub-modules
DR1-DR4 drop sub-modules
WSS wavelength selective switch
10 demultiplexer of degree
12 input port of demultiplexer
14 output ports of demultiplexer
20 multiplexer of degree
22 input ports of multiplexer
24 output port of multiplexer
30 multiplexer of drop sub-module
32 input ports of multiplexer
40 demultiplexer of drop sub-module
42 output ports of demultiplexer, drop ports of add-drop module
50 multiplexer of add sub-module
52 input ports of multiplexer, add ports of add-drop module 60 demultiplexer of add sub-module
62 output ports of demultiplexer
70, 72 connection between degrees
80, 82 connection between degree and add-drop module
90-92 connection between drop sub-module of add-drop modules
95-97 connection between add sub-modules of add-drop modules
200method of establishing CD ROADM system
210providing plurality of degrees
220providing add-drop modules
230providing drop multiplexers
240providing add demultiplexers
250selectively connecting degrees with add-drop modules
260interconnecting add-drop modules
300computer readable medium
310non-transitory data
1000 exemplary data processing system
1002 processor
1004 memory element
1006 system bus
1008 local memory
1010 bulk storage device
1012 input device
1014 output device
1016 network adapter
1018 application

### DETAILED DESCRIPTION OF EMBODIMENTS

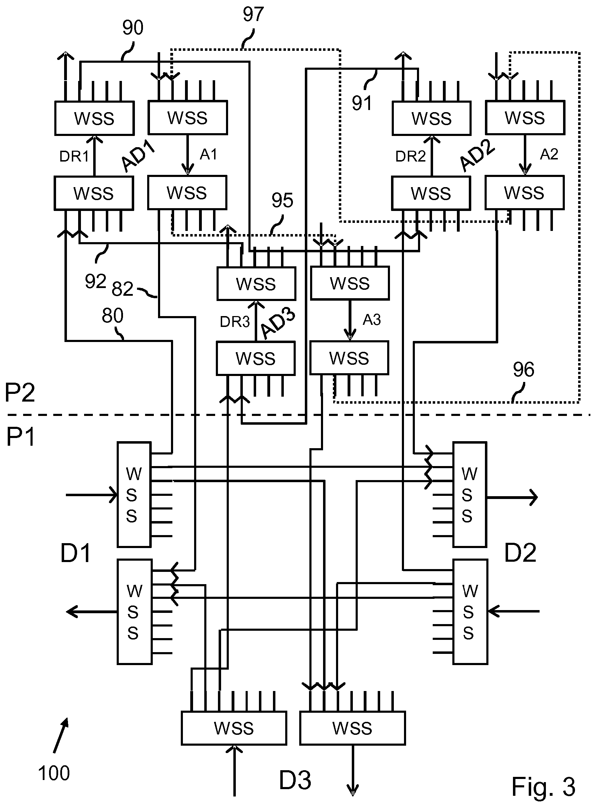

The following describes various embodiments of the CD ROADM system as claimed, for example in a 3-degree and 4-degree configuration. To avoid overly complex figures, the interconnections between degrees and add-drop modules are shown in different figures than the interconnections between the add-drop modules. Only Fig. 3 shows both types of interconnections for a 3-degree configuration.

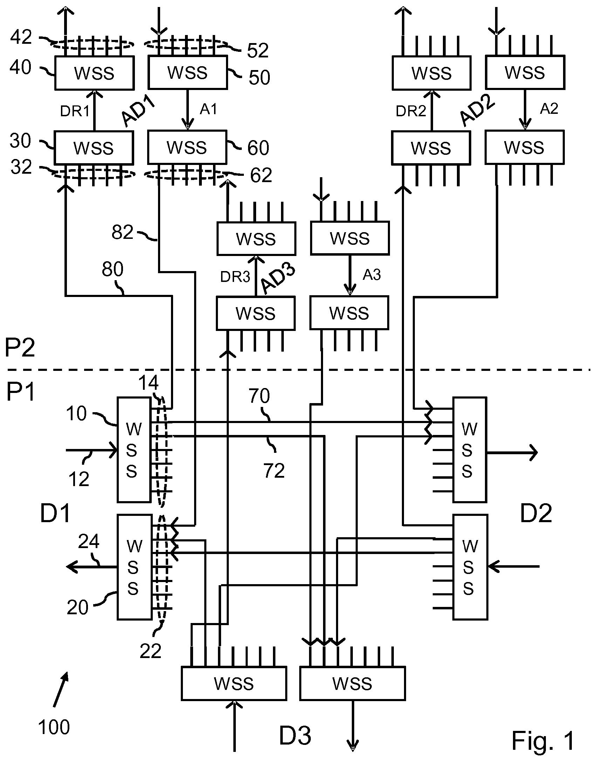

Fig. 1 shows part of a 3-degree ROADM system 100 in which three degrees D1-D3 are provided in a degree plane P1. The following explanation refers to degree D1. However, this explanation may equally apply to the degrees D2, D3, mutatis mutandis. The degree D1 is shown to comprise a demultiplexer 10 and a multiplexer 20. The demultiplexer 10 is shown to comprise an input port 12 for a wavelength multiplexed input signal and a plurality of output ports 14 for demultiplexing the wavelength multiplexed input signal into a plurality of demultiplexed output signals. It is noted that in Fig. 1 and others, connection arrows terminating at or originating from (de)multiplexers denote the presence of input/output ports, without such ports being separately drawn. The demultiplexer 10 is by way of illustration shown to have seven output ports 14, i.e., the demultiplexer 10 is an 1x7 demultiplexer, but may also have any other suitable number of output ports, for example 4, 9, 20, or 32 ports. The same applies to the number of ports of any other described (de)multiplexer and/or WSS. Furthermore, the multiplexer 20 is shown to comprise an output port 24 for a wavelength multiplexed output signal and a plurality of input ports 22 for multiplexing a plurality of input signals into the wavelength multiplexed output signal.

The degrees D1-D3 may be interconnected, for example by a full-mesh as shown in Fig. 1. Here, an output port of degree D1's demultiplexer may be connected to an input port of degree D2's multiplexer, as shown in Fig. 1 by arrow 70, and another output port of degree D1's demultiplexer may be connected to an input port of degree D3's multiplexer, as shown by arrow 72. The same type of connections may be provided from D2 to D1 and D3, and from D3 to D1 and D2, mutatis mutandis. Accordingly, traffic may be routed from any degree to any other degree.

Fig. 1 further shows three add-drop modules AD1-AD3 in an add-drop plane P2. The following explanation refers to add-drop module AD1. However, this explanation may equally apply to the add-drop modules AD2, AD3, mutatis mutandis. The add-drop module AD1 is shown to comprise a drop sub-module DR1 and an add sub-module A1. The drop sub-module DR1 is shown to comprise a drop demultiplexer 40 having a plurality of drop ports 42. In addition, a drop multiplexer 30 is provided in front of the drop demultiplexer 40, with the drop multiplexer 30 having a plurality of input ports 32. Here, '*in front of* refers to the drop demultiplexer 40 receiving the output of the drop multiplexer 30 as input. Moreover, the add sub-module A1 is shown to comprise an add multiplexer 50 having a plurality of add ports 52. In addition, an add demultiplexer 60 is provided behind the add multiplexer 50, with the add demultiplexer 60 having a plurality of output ports 62. Here, '*behind'* refers to the add demultiplexer 60 receiving the output of the add multiplexer 50 as input. It is noted that in the above and following, the adjectives '*add*' and '*drop*' are used to identify the respective (de)multiplexers as belonging to either the add sub-module A1 or the drop sub-module DR1. No other technical considerations are implied by the mere use of said adjectives.

The degrees D1-D3 are shown to be selectively connected to the add-drop modules AD1-AD3. Namely, in the embodiment shown in Fig. 1, each degree is only connected to a corresponding one of the add-drop modules. More specifically, degree D1 is connected to add-drop module AD1 by an output port of the demultiplexer 10 of degree D1 being connected to an input port of the drop multiplexer 30 of add-drop module AD1, as shown by arrow 80 in Fig. 1. In addition, an output port of the add demultiplexer 60 of add-drop module AD1 is connected to an input port of the multiplexer 20 of degree D1, as shown by arrow 82. Moreover, degree D1 lacks any direct connection to add-drop module AD2 and add-drop module AD3.

In a same or similar manner as described above for degree D1 and add-drop module AD1, degree D2 may be connected to add-drop module AD2 and degree D3 may be connected to add-drop module AD3, mutatis mutandis.

It is noted that in the above and following embodiments, the demultiplexers and the multiplexers are each embodied by Wavelength Selective Switches (WSS). However, this is not a limitation, as any other type of (de)multiplexer may be used instead. For example, for the add multiplexer 50, a combiner instead of a WSS may be used, whereas for the drop demultiplexer 40, a splitter instead of a WSS may be used.

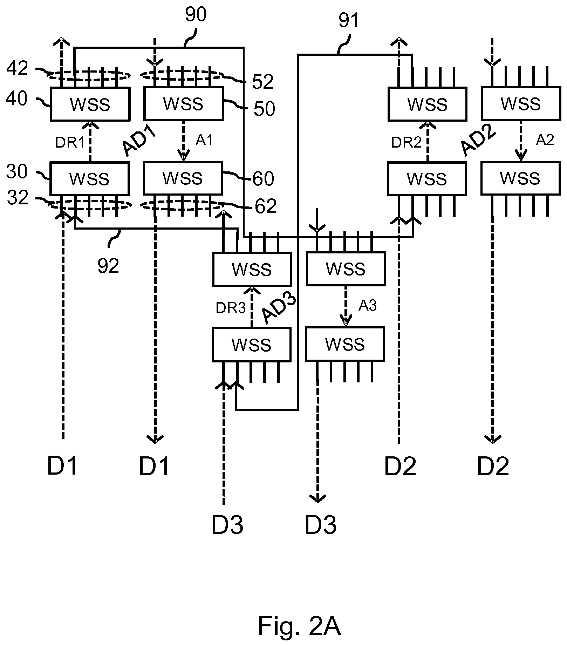

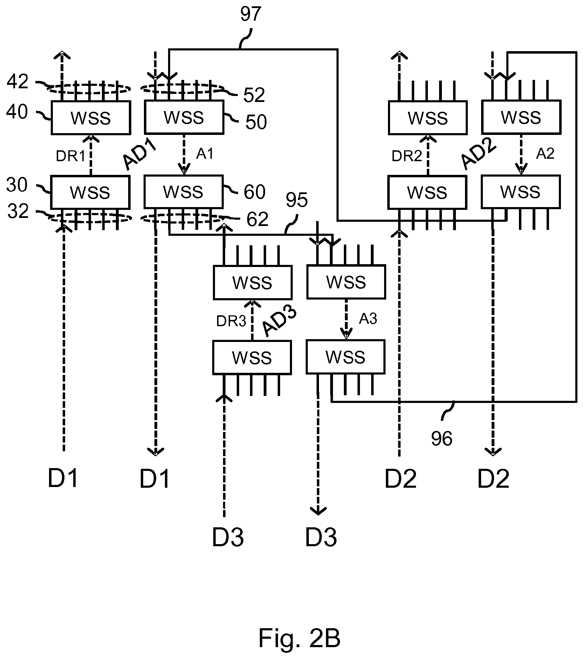

Figs. 2A and 2B illustrate the interconnections between the add-drop modules AD1-AD3 of Fig. 1 by showing the add-drop plane P2 of Fig. 1 in more detail while omitting the degree plane P1. In particular, Figs. 2A and 2B show an embodiment in which the add-drop modules AD1-AD3 are interconnected in the form of a loop, with Fig. 2A showing the interconnections between the drop sub-modules DR1-DR3 and Fig. 2B showing the interconnections between the add sub-modules A1-A3.

In Fig. 2A, it can be seen that an output port of the drop demultiplexer 40 of add-drop module AD1 is connected to an input port of the drop multiplexer of add-drop module AD2, as shown in Fig. 2A by arrow 90, and that an output port of the drop demultiplexer of add-drop module AD2 is connected to an input port of the drop multiplexer of add-drop module AD3, as shown by arrow 91, and that an output port of the drop demultiplexer of add-drop module AD3 is connected to an input port of the drop multiplexer 30 of add-drop module AD1, as shown by arrow 92. Accordingly, a directional loop is formed between the drop sub-modules DR1-DR3.

Fig. 2B shows a similar directional loop formed between the add sub-modules A1-A3 of the add-drop modules AD1-AD3. Namely, it can be seen that an output port of the add demultiplexer 60 of add-drop module AD1 is connected to an input port of the add multiplexer of add-drop module AD3, as shown by arrow 95, and that an output port of the add demultiplexer of add-drop module AD3 is connected to an input port of the add multiplexer of add-drop module AD2, as shown by arrow 96, and that an output port of the add demultiplexer of add-drop module AD2 is connected to an input port of the add multiplexer of add-drop module AD1, as shown by arrow 97. Accordingly, a directional loop is formed between the add sub-modules A1-A3.

Together, the directional loop between the add sub-modules A1-A3 and the directional loop between the drop sub-modules DR1-DR3 form a directional loop for traffic between the add-drop modules AD1-AD3.

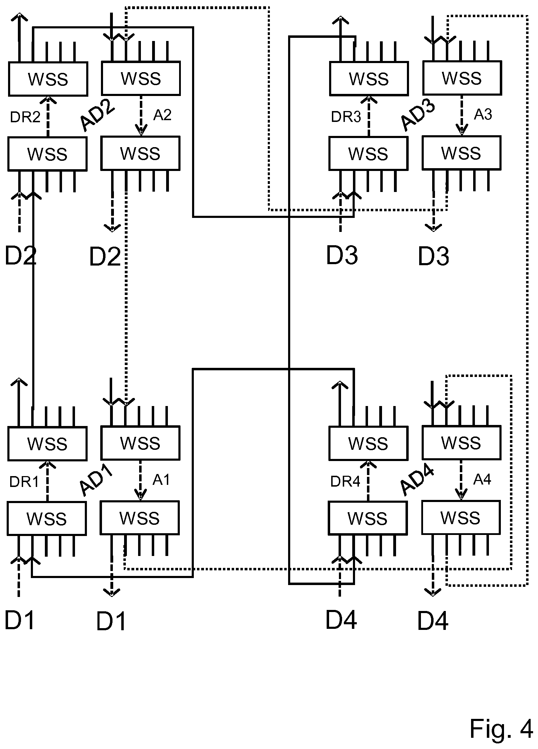

Fig. 3 is a combination of Figs. 1-2B, showing the CD ROADM system 100 with interconnections between the degrees D1-D3 and interconnections between the add-drop modules AD1-AD3, with the former being a full-mesh and the latter being a directional loop. Here and in the following Figs. 4-6, for sake of legibility, the interconnections between the add sub-modules are indicated by dotted arrows and the interconnections between the drop sub-modules are indicated by solid arrows.

Traffic may thus be routed from a particular degree to a particular add or drop port in various ways. For example, to route traffic from the demultiplexer of degree D1 to a drop port of add-drop module AD2, the traffic may be routed from the demultiplexer via connection 80 to the drop sub-module DR1 of add-drop module AD1 and from there via connection 90 to the drop sub-module DR2 where it may be dropped via one of the drop ports. Another example is that traffic which is added via an add port of add-drop module AD2 may be routed to degree D1 via connection 97 to the add-drop module AD1 and from there via connection 82 to degree D1's multiplexer.

There exist various alternative ways of interconnecting the add-drop modules, each having different advantages and possibly disadvantages. Accordingly, the interconnections may be optimized for each use case. Figs. 4-6 each illustrate a further example of these interconnections. Similarly to Figs. 2A and 2B, Figs. 4-6 show only the add-drop plane of the add-drop modules while omitting depicting the degrees. However, the connections to the degrees are still indicated by dashed lines.

Fig. 4 shows the interconnections of add-drop modules for a four-degree (D1-D4) CD ROADM, in which the add-drop modules are interconnected by a loop in a similar manner as shown in Figs. 2A-3. As such, Fig. 4 effectively represents the extension of the manner of interconnecting of Figs. 2A-3 to a four-degree CD ROADM.

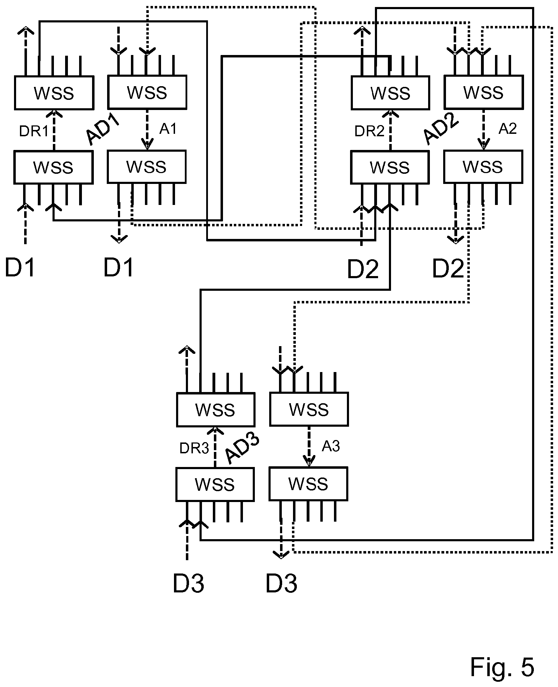

Fig. 5 again shows a three-degree (D1-D3) CD ROADM, with the interconnections between the add-drop modules again forming loop, albeit a different loop than that shown in Fig. 3. Namely, in the Fig. 3 example, the respective loops for the drop sub-modules and the add sub-modules are established by the respective sub-modules being interconnected in a circular manner in that traffic to be dropped could in principle be routed from, for example, AD1 to AD 2 to AD3 and from AD3 directly back again to AD1, thereby forming the 'loop'. In Fig. 5, the drop sub-modules and the add-sub-modules are rather interconnected bidirectionally. As such, there are interconnections from, for example, AD1 to AD2 but also from AD2 to AD1. Compared to Fig. 3, one may still route traffic from AD1 via AD2 to AD3 back again to AD1, thereby forming the loop, but now rather from AD3 back to AD2 back to AD1. As such, in Fig. 5, a different type of loop is established between the add-drop modules.

In this and similar examples of a loop-based interconnection between the add-drop modules, each add-drop module is only connected to two other add-drop modules, e.g., AD1 to AD4 and AD2, AD2 to AD1 and AD3, AD3 to AD2 and AD4, and AD4 to AD3 and AD1. Embodiments are also conceived having more interconnections. For example, not part of the claimed invention, a full-mesh of interconnections may be established in which traffic from each add-drop module may be directly routed to any other add-drop module. This is not yet the case in Fig. 5, as for example routing of traffic from AD1 to AD3 would necessitate routing the traffic from AD1 to AD2 and then to AD3, and vice versa. As such, in Fig. 5, there exists no direct connection for traffic between AD1 and AD3.

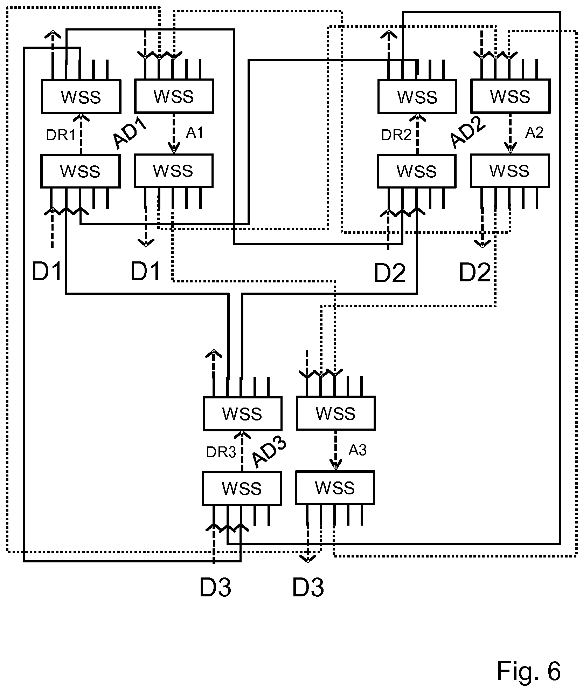

Fig. 6 is similar to Fig. 5, but now shows the add-drop modules of a three-degree CD ROADM system being interconnected in accordance with a full-mesh, which is not part of the claimed invention. It is noted that for a three-degree CD ROAM, such a full-mesh also requires each add-drop module to be connected to two other add-drop modules. However, for a higher (N>3) degree CD ROADM system, a full-mesh would require more (N-1) connections.

In the examples of Fig. 1-6, the add-drop modules are shown to each comprise a drop sub-module having a drop demultiplexer and a drop multiplexer and an add sub-module having an add multiplexer and an add demultiplexer. As such, the degree connections and the add-drop module interconnections are shown to use the ports of these (de)multiplexers. It will be appreciated that many alternative architectures exist for such add-drop modules, for example, having further (de)multiplexers. Accordingly, many alternatives are envisioned for selectively connecting each degree to a respective add-drop module and mutually interconnecting the add-drop modules. Such alternatives are within reach of the person skilled in the art of CD ROADM systems and do not represent a deviation from the scope of the present invention.

With further reference to Figs. 1-6 and considering the multiplexers and demultiplexers of the ROADM system normally being remotely configurable, these may be configured to enable traffic to be routed from any degree to the add-drop module of any other degree. For example, one or more multiplexers and/or demultiplexers of the system may be reconfigured to re-route network traffic designated to be dropped via a designated add-drop module which is connected to a particular degree to flow via i) another degree, and then ii) the add-drop module connected to the other degree, and then iii) the interconnections between the add-drop modules, to the designated add-drop module. For example, when considering the 3-degree system of Fig. 3 and an example in which traffic is to be dropped at AD2 (representing the 'designated' add-drop module), it may not be possible to route the traffic via D2 to AD2. For example, there may be a technical malfunction at D2. In such a case, the traffic may be routed via another degree, e.g., D1, and its add-drop module AD1 (the 'other' degree and the 'other' add-drop module) and then via the interconnection 90 from DR1 to DR2 and thereby from AD1 to AD2. It will be appreciated that this rerouting also applies for network traffic added at a particular add-drop module (e.g., AD1) which is to be routed to a destination. If the degree (D1) is unavailable, the traffic may be routed to another add-drop module (e.g., AD2) and then via its degree (D2) to the destination.

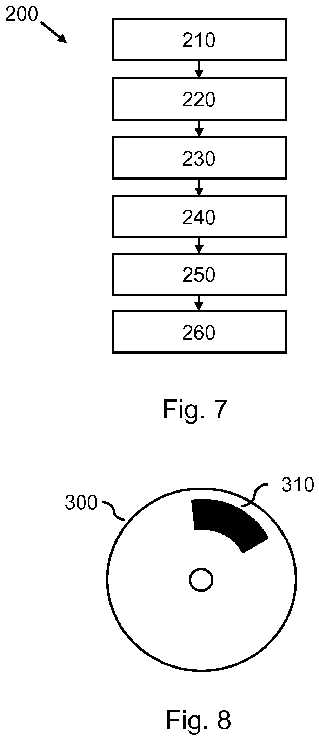

Fig. 7 shows a method 200 of establishing a CD ROADM system as shown in Figs. 1-6. The method 200 may comprise, in a step titled "PROVIDING PLURALITY OF DEGREES", providing 210 a plurality of degrees, for example, as described with reference to Figs. 1-6. The method 200 may further comprise, in a step titled "PROVIDING ADD-DROP MODULES", providing 220 a plurality of add-drop modules, for example, as described with reference to Figs. 1-6. The method 200 may further comprise, in a step titled "SELECTIVELY CONNECTING DEGREES WITH ADD-DROP MODULES", selectively connecting 250 each of the degrees to a respective add-drop module. The method 200 may further comprise, in a step titled "INTERCONNECTING ADD-DROP MODULES", interconnecting 260 the add-drop modules via a set of interconnections to enable traffic to be routed from each add-drop module to each other add-drop module via the set of interconnections.

It will be appreciated that the above and following method steps may be performed in any suitable order, e.g., consecutively, simultaneously, or a combination thereof, subject to, where applicable, a particular order being necessitated.

Various embodiments of the method 200 are conceived. For example, as also shown in Fig. 7, the method 200 may further comprise, in an optional step titled "PROVIDING DROP MULTIPLEXERS", providing 230, in each drop sub-module, a drop multiplexer comprising a plurality of input ports for multiplexing a plurality of input signals into an output signal provided to the drop demultiplexer, and in another optional step titled "PROVIDING ADD DEMULTIPLEXERS", providing 240, in each add sub-module, an add demultiplexer comprising a plurality of output ports for demultiplexing an output signal of the add multiplexer to the plurality of output ports. In this specific embodiment, the step of interconnecting 260 each of the add-drop modules to at least one other add-drop module may comprise connecting an output port of the drop demultiplexer of a respective add-drop module to an input port of the drop multiplexer of the at least one other add-drop module, and connecting an output port of the add demultiplexer of the respective add-drop module to an input port of the add multiplexer of the at least one other add-drop module. In yet another optional step of the method 200, the selectively connecting 250 each of the degrees to the respective add-drop module may comprise connecting each of the degrees to only the respective add-drop module. In yet another optional step, the selectively connecting 250 may comprise connecting an output port of the demultiplexer of the degree to an input port of the drop multiplexer of the drop sub-module, and connecting an input port of the multiplexer of the degree to an output port of the add demultiplexer of the add sub-module.

It is noted that any of the methods described in this specification, for example in any of the claims, may be implemented on a computer as a computer implemented method, as dedicated hardware, or as a combination of both. Instructions for the computer, e.g., executable code, may be stored on a computer readable medium 300 as for example shown in Fig. 8, e.g., in the form of a series 310 of machine readable physical marks and/or as a series of elements having different electrical, e.g., magnetic, or optical properties or values. The executable code may be stored in a transitory or non-transitory manner. Examples of computer readable mediums include memory devices, optical storage devices, integrated circuits, servers, online software, etc. Fig. 8 shows by way of example an optical storage device 300.

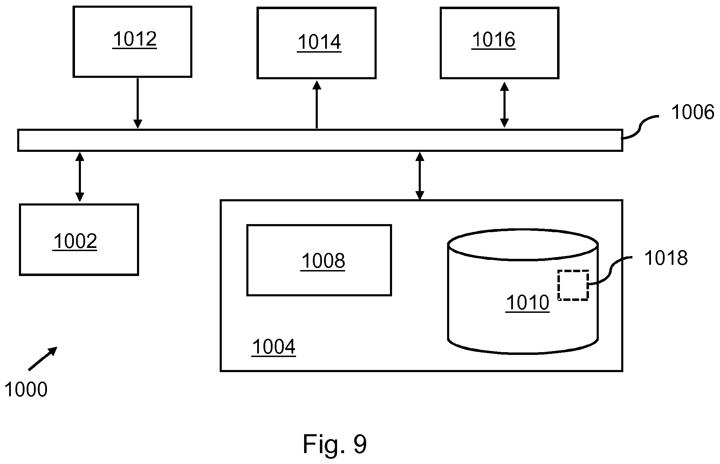

Fig. 9 is a block diagram illustrating an exemplary data processing system 1000 that may be used in the embodiments described in this specification. Such data processing systems include data processing entities described in this specification, including but not limited to a control part of the ROADM systems and computers and computer systems executing any of the methods described in this specification.

The data processing system 1000 may include at least one processor 1002 coupled to memory elements 1004 through a system bus 1006. As such, the data processing system may store program code within memory elements 1004. Furthermore, processor 1002 may execute the program code accessed from memory elements 1004 via system bus 1006. In one aspect, data processing system may be implemented as a computer that is suitable for storing and/or executing program code. It should be appreciated, however, that data processing system 1000 may be implemented in the form of any system including a processor and memory that is capable of performing the functions described within this specification.

The memory elements 1004 may include one or more physical memory devices such as, for example, local memory 1008 and one or more bulk storage devices 1010. Local memory may refer to random access memory or other non-persistent memory device(s) generally used during actual execution of the program code. A bulk storage device may be implemented as a hard drive, solid state disk or other persistent data storage device. The data processing system 1000 may also include one or more cache memories (not shown) that provide temporary storage of at least some program code in order to reduce the number of times program code is otherwise retrieved from bulk storage device 1010 during execution.

Input/output (I/O) devices depicted as input device 1012 and output device 1014 optionally can be coupled to the data processing system. Examples of input devices may include, but are not limited to, for example, a microphone, a keyboard, a pointing device such as a mouse, or the like. Examples of output devices may include, but are not limited to, for example, a monitor or display, speakers, or the like. Input device and/or output device may be coupled to data processing system either directly or through intervening I/O controllers. A network adapter 1016 may also be coupled to data processing system to enable it to become coupled to other systems, computer systems, remote network devices, and/or remote storage devices through intervening private or public networks. The network adapter may comprise a data receiver for receiving data that is transmitted by said systems, devices and/or networks to said data and a data transmitter for transmitting data to said systems, devices and/or networks. Modems, cable modems, and Ethernet cards are examples of different types of network adapter that may be used with data processing system 1000.

As shown in Fig. 9, memory elements 1004 may store an application 1018. It should be appreciated that data processing system 1000 may further execute an operating system (not shown) that can facilitate execution of the application. The application, being implemented in the form of executable program code, can be executed by data processing system 1000, e.g., by processor 1002. Responsive to executing the application, the data processing system may be configured to perform one or more operations to be described herein in further detail.

For example, data processing system 1000 may represent a control part of the ROADM systems as described with reference to Figs. 1-6 and others. In that case, application 1018 may represent an application that, when executed, configures data processing system 1000 to perform the functions described with reference to said control. Data processing system 1000 may also represent a computer for executing any of the methods described in this specification. In that case, application 1018 may represent an application that, when executed, configures data processing system 1000 to perform the functions described with reference to said computer or method.

In the claims, any reference signs placed between parentheses shall not be construed as limiting the claim. Use of the verb "comprise" and its conjugations does not exclude the presence of elements or steps other than those stated in a claim. The article "a" or "an" preceding an element does not exclude the presence of a plurality of such elements. The invention may be implemented by means of hardware comprising several distinct elements, and by means of a suitably programmed computer. In the device claim enumerating several means, several of these means may be embodied by one and the same item of hardware.

## Claims

1. A multi-degree colorless directionless reconfigurable optical add drop multiplexer (CD ROADM) system (100), the system comprising:
- a plurality of degrees (D1-D3, D1-D4), each of the degrees having:
a demultiplexer (10) having an input port (12) for a wavelength multiplexed input signal and a plurality of output ports (14) for demultiplexing the wavelength multiplexed input signal into a plurality of demultiplexed output signals, and
a multiplexer (20) having an output port (24) for a wavelength multiplexed output signal and a plurality of input ports (22) for multiplexing a plurality of input signals into the wavelength multiplexed output signal;
- a plurality of add-drop modules (AD1-AD3, AD1-AD4), wherein each of the add-drop modules comprises an add sub-module (A1-A3, A1-A4) and a drop sub-module (DR1-DR3, DR1-DR4), each drop sub-module comprising a drop demultiplexer (40) having a plurality of drop ports (42) and each add sub-module comprising an add multiplexer (50) having a plurality of add ports (52);
wherein
- each of the degrees (D1-D3, D1-D4) is selectively connected to a respective add-drop module; and
- the add-drop modules (AD1-AD3, AD1-AD4) are interconnected via a set of interconnections (90-92, 95-97) to enable traffic to be routed from each add-drop module to each other add-drop module via the set of interconnections,
**characterized in that**:
the set of interconnections (90-92, 95-97) forms a loop of interconnections between the add-drop modules (AD1-AD3, AD1-AD4) without forming a full mesh of interconnections between the add-drop modules (AD1-AD3, AD1-AD4).

2. The system (100) according to claim 1, wherein each of the degrees (D1-D3, D1-D4) is selectively connected to only the respective add-drop module (AD1-AD3, AD1-AD4).

3. The system (100) according to claim 1 or 2, wherein:
- each drop sub-module (DR1-DR3, DR1-DR4) further comprises a drop multiplexer (30) comprising a plurality of input ports (32) for multiplexing a plurality of input signals into an output signal provided to the drop demultiplexer;
- each add sub-module (A1-A3, A1-A4) further comprises an add demultiplexer (60) comprising a plurality of output ports (62) for demultiplexing an output signal of the add multiplexer to the plurality of output ports; and
- each of the add-drop modules (AD1-AD3, AD1-AD4) is interconnected to at least one other add-drop module by:
an output port (42) of the drop demultiplexer (40) of a respective add-drop module being connected (90-92) to an input port (32) of the drop multiplexer (30) of the at least one other add-drop module, and
an output port (62) of the add demultiplexer (60) of the respective add-drop module being connected (95-97) to an input port (52) of the add multiplexer (50) of the at least one other add-drop module.

4. The system according to claim 3, wherein each of the degrees (D1-D3, D1-D4) is selectively connected to the respective add-drop module by:
- an output port (14) of the demultiplexer of the degree being connected (80) to an input port (32) of the drop multiplexer of the drop sub-module; and
- an input port (22) of the multiplexer of the degree being connected (82) to an output port (62) of the add demultiplexer of the add sub-module.

5. The system (100) according to any one of claims 1 to 4, wherein two of the plurality of add-drop modules are interconnected via an additional connection.

6. The system (100) according to any of the preceding claims, wherein each of the degrees (D1-D3, D1-D4) is interconnected (70, 72) to each of the other degrees to form a full mesh of interconnections, wherein an output port of the demultiplexer of the respective degree is connected to an input port of the multiplexer of each of the other degrees.

7. A transport network comprising a multi-degree colorless directionless reconfigurable optical add drop multiplexer (CD ROADM) system (100), the system comprising:
- a plurality of degrees (D1-D3, D1-D4), each of the degrees having:
a demultiplexer (10) having an input port (12) for a wavelength multiplexed input signal and a plurality of output ports (14) for demultiplexing the wavelength multiplexed input signal into a plurality of demultiplexed output signals, and
a multiplexer (20) having an output port (24) for a wavelength multiplexed output signal and a plurality of input ports (22) for multiplexing a plurality of input signals into the wavelength multiplexed output signal;
- a plurality of add-drop modules (AD1-AD3, AD1-AD4), wherein each of the add-drop modules comprises an add sub-module (A1-A3, A1-A4) and a drop sub-module (DR1-DR3, DR1-DR4), each drop sub-module comprising a drop demultiplexer (40) having a plurality of drop ports (42) and each add sub-module comprising an add multiplexer (50) having a plurality of add ports (52);
wherein
- each of the degrees (D1-D3, D1-D4) is selectively connected to a respective add-drop module; and
- the add-drop modules (AD1-AD3, AD1-AD4) are interconnected via a set of interconnections (90-92, 95-97) to enable traffic to be routed from each add-drop module to each other add-drop module via the set of interconnections;
**characterized in that**
the set of interconnections (90-92, 95-97) forms a loop of interconnections between the add-drop modules (AD1-AD3, AD1-AD4) without forming a full mesh of interconnections between the add-drop modules (AD1-AD3, AD1-AD4).

8. A method of reconfiguring a multi-degree colorless directionless reconfigurable optical add drop multiplexer (CD ROADM) system (100), the system comprising:
- a plurality of degrees (D1-D3, D1-D4), each of the degrees having:
a demultiplexer (10) having an input port (12) for a wavelength multiplexed input signal and a plurality of output ports (14) for demultiplexing the wavelength multiplexed input signal into a plurality of demultiplexed output signals, and
a multiplexer (20) having an output port (24) for a wavelength multiplexed output signal and a plurality of input ports (22) for multiplexing a plurality of input signals into the wavelength multiplexed output signal;
- a plurality of add-drop modules (AD1-AD3, AD1-AD4), wherein each of the add-drop modules comprises an add sub-module (A1-A3, A1-A4) and a drop sub-module (DR1-DR3, DR1-DR4), each drop sub-module comprising a drop demultiplexer (40) having a plurality of drop ports (42) and each add sub-module comprising an add multiplexer (50) having a plurality of add ports (52);
wherein each of the degrees (D1-D3, D1-D4) is selectively connected to a respective add-drop module; and
wherein the add-drop modules (AD1-AD3, AD1-AD4) are interconnected via a set of interconnections (90-92, 95-97) to enable traffic to be routed from each add-drop module to each other add-drop module via the set of interconnections
the method comprising:
- reconfiguring one or more multiplexers (20, 30, 50) and/or demultiplexers (10, 40, 60) of the system to route network traffic designated to be dropped via a designated add-drop module (AD1-AD3, AD1-AD4) which is connected to a particular degree (D1-D3, D1-D4) to flow via:
i) another degree, and then
ii) the add-drop module connected to the other degree, and then
iii) the interconnections (90-92, 95-97) between the add-drop modules,
to the designated add-drop module;
**characterized in that**
the set of interconnections (90-92, 95-97) forms a loop of interconnections between the add-drop modules (AD1-AD3, AD1-AD4) without forming a full mesh of interconnections between the add-drop modules (AD1-AD3, AD1-AD4).

9. A transitory or non-transitory computer-readable medium (300) comprising a computer program, the computer program comprising instructions (310) for causing a processor system comprised in the system according to claims 1 to 6 or in the transport network according to claim 7 to perform the method according to claim 8.

10. A method (200) of establishing a multi-degree colorless directionless reconfigurable optical add drop multiplexer system, the method comprising:
- providing (210) a plurality of degrees (D1-D3, D1-D4), each of the degrees having:
a demultiplexer (10) having an input port (12) for a wavelength multiplexed input signal and a plurality of output ports (14) for demultiplexing the wavelength multiplexed input signal into a plurality of demultiplexed output signals, and
a multiplexer (20) having an output port (24) for a wavelength multiplexed output signal and a plurality of input ports (22) for multiplexing a plurality of input signals into the wavelength multiplexed output signal;
- providing (220) a plurality of add-drop modules (AD1-AD3, AD1-AD4), wherein each of the add-drop modules comprises an add sub-module (A1-A3, A1-A4) and a drop sub-module (DR1-DR3, DR1-DR4), each drop sub-module comprising a drop demultiplexer (40) having a plurality of drop ports (42) and each add sub-module comprising an add multiplexer (50) having a plurality of add ports (52);
- selectively connecting (250) each of the degrees (D1-D3, D1-D4) to a respective add-drop module; and
- interconnecting (260) the add-drop modules (AD1-AD3, AD1-AD4) via a set of interconnections (90-92, 95-97) to enable traffic to be routed from each add-drop module to each other add-drop module via the set of interconnections,
**characterized in that**
the set of interconnections (90-92, 95-97) forms a loop of interconnections between the add-drop modules (AD1-AD3, AD1-AD4) without forming a full mesh of interconnections between the add-drop modules (AD1-AD3, AD1-AD4).

11. The method (200) according to claim 10, wherein selectively connecting (250) each of the degrees (D1-D3, D1-D4) to the respective add-drop module comprises connecting each of the degrees to only the respective add-drop module.

12. The method (200) according to claim 10 or 11, further comprising:
- providing (230), in each drop sub-module (DR1-DR3, DR1-DR4), a drop multiplexer (30) comprising a plurality of input ports (32) for multiplexing a plurality of input signals into an output signal provided to the drop demultiplexer;
- providing (240), in each add sub-module (A1-A3, A1-A4), an add demultiplexer (60) comprising a plurality of output ports (62) for demultiplexing an output signal of the add multiplexer to the plurality of output ports; and
- interconnecting (260) each of the add-drop modules (AD1-AD3, AD1-AD4) to at least one other add-drop module by:
connecting an output port (42) of the drop demultiplexer (40) of a respective add-drop module to an input port (32) of the drop multiplexer (30) of the at least one other add-drop module; and
connecting an output port (62) of the add demultiplexer (60) of the respective add-drop module to an input port (52) of the add multiplexer (50) of the at least one other add-drop module.

13. The method (200) according to claim 12, wherein selectively connecting (250) each of the degrees (D1-D3, D1-D4) to the respective add-drop module comprise:
- connecting an output port (14) of the demultiplexer of the degree to an input port (32) of the drop multiplexer of the drop sub-module; and
- connecting an input port (22) of the multiplexer of the degree to an output port (62) of the add demultiplexer of the add sub-module.

14. The method (200) according to any one of claims 10 to 13, wherein two of the plurality of add-drop modules are interconnected via an additional connection.

## Patentansprüche

1. Mehrgrad-farbloses-richtungsunabhängiges rekonfigurierbares optisches Add-Drop-Multiplexer-(CD ROADM)-System (100), wobei das System umfasst:
eine Vielzahl von Graden (D1-D3, D1-D4), wobei jeder der Grade umfasst:
einen Demultiplexer (10) mit einem Eingangsanschluss (12) für ein wellenlängenmultiplexiertes Eingangssignal und einer Vielzahl von Ausgangsanschlüssen(14) zum Demultiplexen des wellenlängenmultiplexierten Eingangssignals in eine Vielzahl von demultiplexierten Ausgangssignalen, und
einen Multiplexer (20) mit einem Ausgangsanschluss (24) für ein wellenlängenmultiplexiertes Ausgangssignal und einer Vielzahl von Eingangsanschlüssen (22) zum Multiplexen einer Vielzahl von Eingangssignalen in das wellenlängenmultiplexierte Ausgangssignal;
eine Vielzahl von Add-Drop-Modulen (AD1-AD3, AD1-AD4), wobei jedes der Add-Drop-Module ein Add-Submodul (A1-A3, A1-A4) und ein Drop-Submodul (DR1-DR3, DR1-DR4) umfasst, wobei jedes Drop-Submodul einen Drop-Demultiplexer (40) mit einer Vielzahl von Drop-Anschlüssen (42) umfasst und jedes Add-Submodul einen Add-Multiplexer (50) mit einer Vielzahl von Add-Anschlüssen (52) umfasst;
wobei
jeder der Grade (D1-D3, D1-D4) selektiv mit einem jeweiligen Add-Drop-Modul verbunden ist; und
die Add-Drop-Module (AD1-AD3, AD1-AD4) über eine Menge von Verbindungen (90-92, 95-97) miteinander verbunden sind, um zu ermöglichen, dass Datenverkehr von jedem Add-Drop-Modul zu jedem anderen Add-Drop-Modul über die Menge von Verbindungen geleitet wird,
**dadurch gekennzeichnet, dass**
die Menge von Verbindungen (90-92, 95-97) eine Schleife von Verbindungen zwischen den Add-Drop-Modulen (AD1-AD3, AD1-AD4) bildet, ohne ein vollständiges Netz (Full Mesh) von Verbindungen zwischen den Add-Drop-Modulen (AD1-AD3, AD1-AD4) zu bilden.

2. System (100) nach Anspruch 1, wobei jeder der Grade (D1-D3, D1-D4) selektiv nur mit dem jeweiligen Add-Drop-Modul (AD1-AD3, AD1-AD4) verbunden ist.

3. System (100) nach Anspruch 1 oder 2, wobei:
jedes Drop-Submodul (DR1-DR3, DR1-DR4) ferner einen Drop-Multiplexer (30) umfasst, der eine Vielzahl von Eingangsanschlüssen (32) zum Multiplexen einer Vielzahl von Eingangssignalen in ein Ausgangssignal umfasst, das dem Drop-Demultiplexer zugeführt wird;
jedes Add-Submodul (A1-A3, A1-A4) ferner einen Add-Demultiplexer (60) umfasst, der eine Vielzahl von Ausgangsanschlüssen (62) zum Demultiplexen eines Ausgangssignals des Add-Multiplexers zu der Vielzahl von Ausgangsanschlüssen umfasst; und
jedes der Add-Drop-Module (AD1-AD3, AD1-AD4) mit mindestens einem anderen Add-Drop-Modul verbunden ist durch:
einen Ausgangsanschluss (42) des Drop-Demultiplexers (40) eines jeweiligen Add-Drop-Moduls, der (90-92) mit einem Eingangsanschluss (32) des Drop-Multiplexers (30) des mindestens einen anderen Add-Drop-Moduls verbunden ist, und
einen Ausgangsanschluss (62) des Add-Demultiplexers (60) des jeweiligen Add-Drop-Moduls, der (95-97) mit einem Eingangsanschluss (52) des Add-Multiplexers (50) des mindestens einen anderen Add-Drop-Moduls verbunden ist.

4. System nach Anspruch 3, wobei jeder der Grade (D1-D3, D1-D4) selektiv mit dem jeweiligen Add-Drop-Modul verbunden ist durch:
einen Ausgangsanschluss (14) des Demultiplexers des Grades, der (80) mit einem Eingangsanschluss (32) des Drop-Multiplexers des Drop-Submoduls verbunden ist; und
einen Eingangsanschluss (22) des Multiplexers des Grades, der (82) mit einem Ausgangsanschluss (62) des Add-Demultiplexers des Add-Submoduls verbunden ist.

5. System (100) nach einem der Ansprüche 1 bis 4, wobei zwei der Vielzahl von Add-Drop-Modulen über eine zusätzliche Verbindung miteinander verbunden sind.

6. System (100) nach einem der vorhergehenden Ansprüche, wobei jeder der Grade (D1-D3, D1-D4) (70, 72) mit jedem der anderen Grade verbunden ist, um ein vollständiges Netz von Verbindungen zu bilden, wobei ein Ausgangsanschluss des Demultiplexers des jeweiligen Grades mit einem Eingangsanschluss des Multiplexers jedes der anderen Grade verbunden ist.

7. Transportnetzwerk, das ein Mehrgrad-farbloses-richtungsunabhängiges rekonfigurierbares optisches Add-Drop-Multiplexer-(CD ROADM)-System (100) umfasst, wobei das System umfasst:
eine Vielzahl von Graden (D1-D3, D1-D4), wobei jeder der Grade umfasst:
einen Demultiplexer (10) mit einem Eingangsanschluss (12) für ein wellenlängenmultiplexiertes Eingangssignal und einer Vielzahl von Ausgangsanschlüssen (14) zum Demultiplexen des wellenlängenmultiplexierten Eingangssignals in eine Vielzahl von demultiplexierten Ausgangssignalen, und
einen Multiplexer (20) mit einem Ausgangsanschluss (24) für ein wellenlängenmultiplexiertes Ausgangssignal und einer Vielzahl von Eingangsanschlüssen (22) zum Multiplexen einer Vielzahl von Eingangssignalen in das wellenlängenmultiplexierte Ausgangssignal;
eine Vielzahl von Add-Drop-Modulen (AD1-AD3, AD1-AD4), wobei jedes der Add-Drop-Module ein Add-Submodul (A1-A3, A1-A4) und ein Drop-Submodul (DR1-DR3, DR1-DR4) umfasst, wobei jedes Drop-Submodul einen Drop-Demultiplexer (40) mit einer Vielzahl von Drop-Ports (42) umfasst und jedes Add-Submodul einen Add-Multiplexer (50) mit einer Vielzahl von Add-Ports (52) umfasst;
wobei
jeder der Grade (D1-D3, D1-D4) selektiv mit einem jeweiligen Add-Drop-Modul verbunden ist; und
die Add-Drop-Module (AD1-AD3, AD1-AD4) über eine Menge von Verbindungen (90-92, 95-97) miteinander verbunden sind, um zu ermöglichen, dass Datenverkehr von jedem Add-Drop-Modul zu jedem anderen Add-Drop-Modul über die Menge von Verbindungen geleitet wird,
**dadurch gekennzeichnet, dass**
die Menge von Verbindungen (90-92, 95-97) eine Schleife von Verbindungen zwischen den Add-Drop-Modulen (AD1-AD3, AD1-AD4) bildet, ohne ein vollständiges Netz von Verbindungen zwischen den Add-Drop-Modulen (AD1-AD3, AD1-AD4) zu bilden.

8. Verfahren zum Rekonfigurieren eines Mehrgrad-farblosen-richtungsunabhängigen rekonfigurierbaren optischen Add-Drop-Multiplexer-(CD ROADM)-Systems (100), wobei das System umfasst:
eine Vielzahl von Graden (D1-D3, D1-D4), wobei jeder der Grade umfasst:
einen Demultiplexer (10) mit einem Eingangsanschluss (12) für ein wellenlängenmultiplexiertes Eingangssignal und einer Vielzahl von Ausgangsanschlüssen (14) zum Demultiplexen des wellenlängenmultiplexierten Eingangssignals in eine Vielzahl von demultiplexierten Ausgangssignalen, und
einen Multiplexer (20) mit einem Ausgangsanschluss (24) für ein wellenlängenmultiplexiertes Ausgangssignal und einer Vielzahl von Eingangsanschlüssen (22) zum Multiplexen einer Vielzahl von Eingangssignalen in das wellenlängenmultiplexierte Ausgangssignal;
eine Vielzahl von Add-Drop-Modulen (AD1-AD3, AD1-AD4), wobei jedes der Add-Drop-Module ein Add-Submodul (A1-A3, A1-A4) und ein Drop-Submodul (DR1-DR3, DR1-DR4) umfasst, wobei jedes Drop-Submodul einen Drop-Demultiplexer (40) mit einer Vielzahl von Drop-Anschlüssen (42) umfasst und jedes Add-Submodul einen Add-Multiplexer (50) mit einer Vielzahl von Add-Anschlüssen (52) umfasst;
wobei jeder der Grade (D1-D3, D1-D4) selektiv mit einem jeweiligen Add-Drop-Modul verbunden ist; und
wobei die Add-Drop-Module (AD1-AD3, AD1-AD4) über eine Menge von Verbindungen (90-92, 95-97) miteinander verbunden sind, um zu ermöglichen, dass Datenverkehr von jedem Add-Drop-Modul zu jedem anderen Add-Drop-Modul über die Menge von Verbindungen geleitet wird,
wobei das Verfahren umfasst:
Rekonfigurieren eines oder mehrerer Multiplexer (20, 30, 50) und/oder Demultiplexer (10, 40, 60) des Systems, um Netzwerkverkehr, der zum Abwurf über ein bestimmtes Add-Drop-Modul (AD1-AD3, AD1-AD4), das mit einem bestimmten Grad (D1-D3, D1-D4) verbunden ist, vorgesehen ist, zu leiten über:
i) einen anderen Grad, und dann
ii) das mit dem anderen Grad verbundene Add-Drop-Modul, und dann
iii) die Verbindungen (90-92, 95-97) zwischen den Add-Drop-Modulen
zu dem bestimmten Add-Drop-Modul;
**dadurch gekennzeichnet, dass**
die Menge von Verbindungen (90-92, 95-97) eine Schleife von Verbindungen zwischen den Add-Drop-Modulen (AD1-AD3, AD1-AD4) bildet, ohne ein vollständiges Netz von Verbindungen zwischen den Add-Drop-Modulen (AD1-AD3, AD1-AD4) zu bilden.

9. Flüchtiges oder nichtflüchtiges computerlesbares Medium (300), das ein Computerprogramm umfasst, wobei das Computerprogramm Anweisungen (310) umfasst, um ein Prozessorsystem, das im System gemäß den Ansprüchen 1 bis 6 oder im Transportnetzwerk gemäß Anspruch 7 enthalten ist, zu veranlassen, das Verfahren gemäß Anspruch 8 auszuführen.

10. Verfahren (200) zum Einrichten eines Mehrgrad-farblosen-richtungsunabhängigen rekonfigurierbaren optischen Add-Drop-Multiplexer-Systems, wobei das Verfahren umfasst:
Bereitstellen (210) einer Vielzahl von Graden (D1-D3, D1-D4), wobei jeder der Grade umfasst:
einen Demultiplexer (10) mit einem Eingangsanschluss (12) für ein wellenlängenmultiplexiertes Eingangssignal und einer Vielzahl von Ausgangsanschlüssen (14) zum Demultiplexen des wellenlängenmultiplexierten Eingangssignals in eine Vielzahl von demultiplexierten Ausgangssignalen, und
einen Multiplexer (20) mit einem Ausgangsanschluss (24) für ein wellenlängenmultiplexiertes Ausgangssignal und einer Vielzahl von Eingangsanschlüssen (22) zum Multiplexen einer Vielzahl von Eingangssignalen in das wellenlängenmultiplexierte Ausgangssignal;
Bereitstellen (220) einer Vielzahl von Add-Drop-Modulen (AD1-AD3, AD1-AD4), wobei jedes der Add-Drop-Module ein Add-Submodul (A1-A3, A1-A4) und ein Drop-Submodul (DR1-DR3, DR1-DR4) umfasst, wobei jedes Drop-Submodul einen Drop-Demultiplexer (40) mit einer Vielzahl von Drop-Anschlüssen (42) umfasst und jedes Add-Submodul einen Add-Multiplexer (50) mit einer Vielzahl von Add-Anschlüssen (52) umfasst;
selektives Verbinden (250) jedes der Grade (D1-D3, D1-D4) mit einem jeweiligen Add-Drop-Modul; und
Vernetzen (260) der Add-Drop-Module (AD1-AD3, AD1-AD4) über eine Menge von Verbindungen (90-92, 95-97), um zu ermöglichen, dass Datenverkehr von jedem Add-Drop-Modul zu jedem anderen Add-Drop-Modul über die Menge von Verbindungen geleitet wird;
selektives Verbinden (250) jedes der Grade (D1-D3, D1-D4) mit einem jeweiligen Add-Drop-Modul; und
Vernetzen (260) der Add-Drop-Module (AD1-AD3, AD1-AD4) über eine Menge von Verbindungen (90-92, 95-97), um zu ermöglichen, dass Datenverkehr von jedem Add-Drop-Modul zu jedem anderen Add-Drop-Modul über die Menge von Verbindungen geleitet wird,
**dadurch gekennzeichnet, dass**
die Menge von Verbindungen (90-92, 95-97) eine Schleife von Verbindungen zwischen den Add-Drop-Modulen (AD1-AD3, AD1-AD4) bildet, ohne ein vollständiges Netz von Verbindungen zwischen den Add-Drop-Modulen (AD1-AD3, AD1-AD4) zu bilden.

11. Verfahren (200) nach Anspruch 10, wobei das selektive Verbinden (250) jedes der Grade (D1-D3, D1-D4) mit dem jeweiligen Add-Drop-Modul das Verbinden jedes der Grade nur mit dem jeweiligen Add-Drop-Modul umfasst.

12. Verfahren (200) nach Anspruch 10 oder 11, ferner umfassend:
Bereitstellen (230) in jedem Drop-Submodul (DR1-DR3, DR1-DR4) eines Drop-Multiplexers (30), der eine Vielzahl von Eingangsports (32) zum Multiplexen einer Vielzahl von Eingangssignalen in ein Ausgangssignal umfasst, das dem Drop-Demultiplexer zugeführt wird;
Bereitstellen (240) in jedem Add-Submodul (A1-A3, A1-A4) eines Add-Demultiplexers (60), der eine Vielzahl von Ausgangsanschlüssen (62) zum Demultiplexen eines Ausgangssignals des Add-Multiplexers zu der Vielzahl von Ausgangsanschlüssen umfasst; und
Vernetzen (260) jedes der Add-Drop-Module (AD1-AD3, AD1-AD4) mit mindestens einem anderen Add-Drop-Modul durch:
Verbinden eines Ausgangsanschlusses (42) des Drop-Demultiplexers (40) eines jeweiligen Add-Drop-Moduls mit einem Eingangsanschluss (32) des Drop-Multiplexers (30) des mindestens einen anderen Add-Drop-Moduls; und
Verbinden eines Ausgangsanschlusses (62) des Add-Demultiplexers (60) des jeweiligen Add-Drop-Moduls mit einem Eingangsanschluss (52) des Add-Multiplexers (50) des mindestens einen anderen Add-Drop-Moduls.

13. Verfahren (200) nach Anspruch 12, wobei das selektive Verbinden (250) jedes der Grade (D1-D3, D1-D4) mit dem jeweiligen Add-Drop-Modul umfasst:
Verbinden eines Ausgangsanschlusses (14) des Demultiplexers des Grades mit einem Eingangsanschluss (32) des Drop-Multiplexers des Drop-Submoduls; und
Verbinden eines Eingangsanschlusses (22) des Multiplexers des Grades mit einem Ausgangsanschluss (62) des Add-Demultiplexers des Add-Submoduls.

14. Verfahren (200) nach einem der Ansprüche 10 bis 13, wobei zwei der Vielzahl von Add-Drop-Modulen über eine zusätzliche Verbindung miteinander verbunden sind.

## Revendications

1. Système (100) de multiplexeur optique d'insertion-extraction reconfigurable, sans direction, sans couleur (CD ROADM) à degrés multiples, le système comprenant :
- une pluralité de degrés (D1-D3, D1-D4), chacun des degrés ayant :
un démultiplexeur (10) ayant un port d'entrée (12) pour un signal d'entrée multiplexé en longueur d'onde et une pluralité de ports de sortie (14) pour démultiplexer le signal d'entrée multiplexé en longueur d'onde en une pluralité de signaux de sortie démultiplexés, et
un multiplexeur (20) ayant un port de sortie (24) pour un signal de sortie multiplexé en longueur d'onde et une pluralité de ports d'entrée (22) pour multiplexer une pluralité de signaux d'entrée dans le signal de sortie multiplexé en longueur d'onde ;
- une pluralité de modules d'insertion-extraction (AD1-AD3, AD1-AD4), dans lequel chacun des modules d'insertion-extraction comprend un sous-module d'insertion (A1-A3, A1-A4) et un sous-module d'extraction (DR1-DR3, DR1-DR4), chaque sous-module d'extraction comprenant un démultiplexeur d'extraction (40) ayant une pluralité de ports d'extraction (42) et chaque sous-module d'insertion comprenant un multiplexeur d'insertion (50) ayant une pluralité de ports d'insertion (52) ;
dans lequel
- chacun des degrés (D1-D3, D1-D4) est connecté sélectivement à un module d'insertion-extraction respectif ; et
- les modules d'insertion-extraction (AD1-AD3, AD1-AD4) sont interconnectés via un ensemble d'interconnexions (90-92, 95-97) pour permettre au trafic d'être routé de chaque module d'insertion-extraction à chaque autre module d'insertion-extraction via l'ensemble d'interconnexions,
**caractérisé en ce que** :
l'ensemble d'interconnexions (90-92, 95-97) forme une boucle d'interconnexions entre les modules d'insertion-extraction (AD1-AD3, AD1-AD4) sans former un maillage complet d'interconnexions entre les modules d'insertion-extraction (AD1-AD3, AD1-AD4).

2. Système (100) selon la revendication 1, dans lequel chacun des degrés (D1-D3, D1-D4) n'est connecté sélectivement qu'au module d'insertion-extraction (AD1-AD3, AD1-AD4) respectif.

3. Système (100) selon la revendication 1 ou 2, dans lequel :
- chaque sous-module d'extraction (DR1-DR3, DR1-DR4) comprend en outre un multiplexeur d'extraction (30) comprenant une pluralité de ports d'entrée (32) pour multiplexer une pluralité de signaux d'entrée en un signal de sortie fourni au démultiplexeur d'extraction ;
- chaque sous-module d'insertion (A1-A3, A1-A4) comprend en outre un démultiplexeur d'insertion (60) comprenant une pluralité de ports de sortie (62) pour démultiplexer un signal de sortie du multiplexeur d'insertion vers la pluralité de ports de sortie ; et
- chacun des modules d'insertion-extraction (AD1-AD3, AD1-AD4) est interconnecté à au moins un autre module d'insertion-extraction par :
un port de sortie (42) du multiplexeur d'extraction (40) d'un module d'insertion-extraction respectif étant connecté (90-92) à un port d'entrée (32) du multiplexeur d'extraction (30) d'au moins un autre module d'insertion-extraction, et
un port de sortie (62) du démultiplexeur d'insertion (60) du module d'insertion-extraction respectif étant connecté (95-97) à un port d'entrée (52) du multiplexeur d'insertion (50) d'au moins un autre module d'insertion-extraction.

4. Système selon la revendication 3, dans lequel chacun des degrés (D1-D3, D1-D4) est connecté sélectivement au module d'insertion-extraction respectif par :
- un port de sortie (14) du démultiplexeur du degré étant connecté (80) à un port d'entrée (32) du multiplexeur d'extraction du sous-module d'extraction ; et
- un port d'entrée (22) du multiplexeur du degré étant connecté (82) à un port de sortie (62) du démultiplexeur d'insertion du sous-module d'insertion.

5. Système (100) selon l'une quelconque des revendications 1 à 4, dans lequel deux de la pluralité de modules d'insertion-extraction sont interconnectés via une connexion supplémentaire.

6. Système (100) selon l'une quelconque des revendications précédentes, dans lequel chacun des degrés (D1-D3, D1-D4) est interconnecté (70, 72) à chacun des autres degrés pour former un maillage complet d'interconnexions, dans lequel un port de sortie du démultiplexeur du degré respectif est connecté à un port d'entrée du multiplexeur de chacun des autres degrés.

7. Réseau de transport comprenant un système (100) de multiplexeur optique d'insertion-extraction reconfigurable, sans direction, sans couleur (CD ROADM) à degrés multiples, le système comprenant :
- une pluralité de degrés (D1-D3, D1-D4), chacun des degrés ayant :
un démultiplexeur (10) ayant un port d'entrée (12) pour un signal d'entrée multiplexé en longueur d'onde et une pluralité de ports de sortie (14) pour démultiplexer le signal d'entrée multiplexé en longueur d'onde en une pluralité de signaux de sortie démultiplexés, et
un multiplexeur (20) ayant un port de sortie (24) pour un signal de sortie multiplexé en longueur d'onde et une pluralité de ports d'entrée (22) pour multiplexer une pluralité de signaux d'entrée en le signal de sortie multiplexé en longueur d'onde ;
- une pluralité de modules d'insertion-extraction (AD1-AD3, AD1-AD4), dans lequel chacun des modules d'insertion-extraction comprend un sous-module d'insertion (A1-A3, A1-A4) et un sous-module d'extraction (DR1-DR3, DR1-DR4), chaque sous-module d'extraction comprenant un démultiplexeur d'extraction (40) ayant une pluralité de ports d'extraction (42) et chaque sous-module d'insertion comprenant un multiplexeur d'insertion (50) ayant une pluralité de ports d'insertion (52) ;
dans lequel
- chacun des degrés (D1-D3, D1-D4) est connecté sélectivement à un module d'insertion-extraction respectif ; et
- les modules d'insertion-extraction (AD1-AD3, AD1-AD4) sont interconnectés via un ensemble d'interconnexions (90-92, 95-97) pour permettre au trafic d'être routé de chaque module d'insertion-extraction à chaque autre module d'insertion-extraction via l'ensemble d'interconnexions ;
**caractérisé en ce que**
l'ensemble d'interconnexions (90-92, 95-97) forme une boucle d'interconnexions entre les modules d'insertion-extraction (AD1-AD3, AD1-AD4) sans former un maillage complet d'interconnexions entre les modules d'insertion-extraction (AD1-AD3, AD1-AD4).

8. Procédé de reconfiguration d'un système (100) de multiplexeur optique d'insertion-extraction reconfigurable sans direction, sans couleur (CD ROADM) à degrés multiples, le système comprenant :
- une pluralité de degrés (D1-D3, D1-D4), chacun des degrés ayant :
un démultiplexeur (10) ayant un port d'entrée (12) pour un signal d'entrée multiplexé en longueur d'onde et une pluralité de ports de sortie (14) pour démultiplexer le signal d'entrée multiplexé en longueur d'onde en une pluralité de signaux de sortie démultiplexés, et
un multiplexeur (20) ayant un port de sortie (24) pour un signal de sortie multiplexé en longueur d'onde et une pluralité de ports d'entrée (22) pour multiplexer une pluralité de signaux d'entrée en le signal de sortie multiplexé en longueur d'onde ;
- une pluralité de modules d'insertion-extraction (AD1-AD3, AD1-AD4), dans lequel chacun des modules d'insertion-extraction comprend un sous-module d'insertion (A1-A3, A1-A4) et un sous-module d'extraction (DR1-DR3, DR1-DR4), chaque sous-module d'extraction comprenant un démultiplexeur d'extraction (40) ayant une pluralité de ports d'extraction (42) et chaque sous-module d'insertion comprenant un multiplexeur d'insertion (50) ayant une pluralité de ports d'insertion (52) ;
dans lequel chacun des degrés (D1-D3, D1-D4) est connecté sélectivement à un module d'insertion-extraction respectif ; et
dans lequel les modules d'insertion-extraction (AD1-AD3, AD1-AD4) sont interconnectés via un ensemble d'interconnexions (90-92, 95-97) pour permettre au trafic d'être routé de chaque module d'insertion-extraction à chaque autre module d'insertion-extraction via l'ensemble d'interconnexions
le procédé, comprenant :
- la reconfiguration d'un ou plusieurs multiplexeurs (20, 30, 50) et/ou démultiplexeurs (10, 40, 60) du système pour router un trafic de réseau désigné pour être extrait via un module d'insertion-extraction (AD1-AD3, AD1-AD4) désigné qui est connecté à un degré (D1-D3, D1-D4) particulier pour circuler via :
i) un autre degré, puis
ii) le module d'insertion-extraction connecté à l'autre degré, puis
iii) les interconnexions (90-92, 95-97) entre les modules d'insertion-extraction, vers le module d'insertion-extraction désigné ;
**caractérisé en ce que**
l'ensemble d'interconnexions (90-92, 95-97) forme une boucle d'interconnexions entre les modules d'insertion-extraction (AD1-AD3, AD1-AD4) sans former un maillage complet d'interconnexions entre les modules d'insertion-extraction (AD1-AD3, AD1-AD4).

9. Support transitoire ou non transitoire lisible par ordinateur (300) comprenant un programme informatique, le programme informatique comprenant des instructions (310) pour amener un système de processeur compris dans le système selon les revendications 1 à 6 ou dans le réseau de transport selon la revendication 7 à réaliser le procédé selon la revendication 8.

10. Procédé (200) d'établissement d'un système de multiplexeur optique d'insertion-extraction reconfigurable sans direction, sans couleur, à degrés multiples, le procédé comprenant :
- la fourniture (210) d'une pluralité de degrés (D1-D3, D1-D4), chacun des degrés ayant :
un démultiplexeur (10) ayant un port d'entrée (12) pour un signal d'entrée multiplexé en longueur d'onde et une pluralité de ports de sortie (14) pour démultiplexer le signal d'entrée multiplexé en longueur d'onde en une pluralité de signaux de sortie démultiplexés, et
un multiplexeur (20) ayant un port de sortie (24) pour un signal de sortie multiplexé en longueur d'onde et une pluralité de ports d'entrée (22) pour multiplexer une pluralité de signaux d'entrée en le signal de sortie multiplexé en longueur d'onde ;
- la fourniture (220) d'une pluralité de modules d'insertion-extraction (AD1-AD3, AD1-AD4), dans lequel chacun des modules d'insertion-extraction comprend un sous-module d'insertion (A1-A3, A1-A4) et un sous-module d'extraction (DR1-DR3, DR1-DR4), chaque sous-module d'extraction comprenant un démultiplexeur d'extraction (40) ayant une pluralité de ports d'extraction (42) et chaque sous-module d'insertion comprenant un multiplexeur d'insertion (50) ayant une pluralité de ports d'insertion (52) ;
- la connexion sélective (250) de chacun des degrés (D1-D3, D1-D4) à un module d'insertion-extraction respectif ; et
- l'interconnexion (260) des modules d'insertion-extraction (AD1-AD3, AD1-AD4) via un ensemble d'interconnexions (90-92, 95-97) pour permettre au trafic d'être routé de chaque module d'insertion-extraction à chaque autre module d'insertion-extraction via l'ensemble d'interconnexions,
**caractérisé en ce que**
l'ensemble d'interconnexions (90-92, 95-97) forme une boucle d'interconnexions entre les modules d'insertion-extraction (AD1-AD3, AD1-AD4) sans former un maillage complet d'interconnexions entre les modules d'insertion-extraction (AD1-AD3, AD1-AD4).

11. Procédé (200) selon la revendication 10, dans lequel la connexion sélective (250) de chacun des degrés (D1-D3, D1-D4) au module d'insertion-extraction respectif comprend la connexion de chacun des degrés uniquement au module d'insertion-extraction respectif.

12. Procédé (200) selon la revendication 10 ou 11, comprenant en outre :
- la fourniture (230), dans chaque sous-module d'extraction (DR1-DR3, DR1-DR4), d'un multiplexeur d'extraction (30) comprenant une pluralité de ports d'entrée (32) pour multiplexer une pluralité de signaux d'entrée en un signal de sortie fourni au démultiplexeur d'extraction ;
- la fourniture (240), dans chaque sous-module d'insertion (A1-A3, A1-A4), d'un démultiplexeur d'insertion (60) comprenant une pluralité de ports de sortie (62) pour démultiplexer un signal de sortie du multiplexeur d'insertion à la pluralité de ports de sortie ; et
- l'interconnexion (260) de chacun des modules d'insertion-extraction (AD1-AD3, AD1-AD4) à au moins un autre module d'insertion-extraction en :
connectant un port de sortie (42) du démultiplexeur d'extraction (40) d'un module d'insertion-extraction respectif à un port d'entrée (32) du multiplexeur d'extraction (30) d'au moins un autre module d'insertion-extraction ; et
connectant un port de sortie (62) du démultiplexeur d'insertion (60) du module d'insertion-extraction respectif à un port d'entrée (52) du multiplexeur d'insertion (50) d'au moins un autre module d'insertion-extraction.

13. Procédé (200) selon la revendication 12, dans lequel la connexion sélective (250) de chacun des degrés (D1-D3, D1-D4) au module d'insertion-extraction respectif comprend :
- la connexion d'un port de sortie (14) du démultiplexeur du degré à un port d'entrée (32) du multiplexeur d'extraction du sous-module d'extraction ; et
- la connexion d'un port d'entrée (22) du multiplexeur du degré à un port de sortie (62) du démultiplexeur d'insertion du sous-module d'extraction.

14. Procédé (200) selon l'une quelconque des revendications 10 à 13, dans lequel deux de la pluralité de modules d'insertion-extraction sont interconnectés via une connexion supplémentaire.
